# EUROPÄISCHE PATENTANMELDUNG

(11) **EP 1 235 148 A2**
(43) Veröffentlichungstag der Anmeldung: **28.08.2002**
(21) Anmeldenummer: 02100145.8
(22) Anmeldetag: 19.02.2002
(51) Int. Cl.: G06F 9/445

(54) **Schneller Systemstart für eingebettete Systeme**

(30) Priorität: 22.02.2001 DE 10108552; 11.01.2002 DE 10200902
(71) Anmelder: SIEMENS AKTIENGESELLSCHAFT, 80333 München (DE)
(72) Erfinder: Alonso-Nogueiro, Luis-Alfredo, Dr., 81547, München (DE); Küfner, Holger, Dr., 97422 Schweinfurt (DE); Schmitt, Klaus Jürgen, 81373, München (DE)

(57) **Zusammenfassung**

Die Erfindung beruht darauf, dass der Inhalt des Datenspeichers und die Prozessorregister nach dem Starten einer Applikation eingefroren und nichtflüchtig abgespeichert wird. Die Verkürzung des Startvorgangs bzw. der Bootup-Zeit wird dadurch erreicht, dass bei dem beschleunigten Bootup die Applikation nicht auf herkömmlichem Wege gestartet werden muss, sondern dass lediglich der Datenspeicher und die Registerinhalte des Prozessors aus dem nichtflüchtigen Speicher rekonstruiert, also im einfachsten Falle kopiert werden müssen.

## Beschreibung

Die Erfindung betrifft ein Verfahren zur Beschleunigung eines Startvorganges einer Applikation mit großem Softwareanteil auf einem Rechnersystem, wobei der Rechner über einen Datenspeicher und einen Prozessor mit Prozessorregistern verfügt, sowie ein korrespondierendes Rechnersystem mit schneller Startfunktion zur Ausführung einer Applikation.

Bei Entwicklungen heutiger eingebetteter Systeme bzw. Embedded Systeme wächst der Software-Anteil in drastischer Weise. Durch Initialisierung und Laden dieser großen Software-Pakete wächst proportional zur Größe der Zeitbedarf, um diese Systeme zu starten.

Dies wird vom Kunden aber nur sehr schwer toleriert. Wünschenswert ist ein System, dass trotz einer großen Komplexität in sehr kurzer Zeit aus dem völlig ausgeschalteten Zustand in einen für den Benutzer bedienbaren Zustand überführt werden kann. Beispielsweise soll ein Autoradio nahezu sofort bedienbar sein, wenn es eingeschaltet wird. Heutige in Entwicklung stehende komplexe Systeme der Automatisierung oder der Automobiltechnik benötigen Startzeiten zwischen 20 bis 60 Sekunden, die nicht akzeptabel sind.

Da oben beschriebene komplexe Systeme gerade in der Entwicklung sind, trat das Problem eines nicht ausreichend schnellen Startverhaltens bis jetzt so nicht auf und wurde daher bis jetzt auch nicht gelöst. Von einem großen Softwareanteil wird in dieser Erfindung ausgegangen, wenn ein herkömmlicher Ladevorgang eine Bootzeit von 20 Sekunden bis 60 Sekunden oder mehr zur Folge hat.

Aufgabe der vorliegenden Erfindung ist es daher, eine Möglichkeit zu schaffen, solche Startvorgänge entscheidend zu verkürzen.

Gemäß der Erfindung wird diese Aufgabe durch ein Verfahren zur Beschleunigung eines Startvorganges einer Applikation mit großem Softwareanteil auf einem Rechnersystem gelöst, wobei der Rechner über einen Datenspeicher und einen Prozessor mit Prozessorregistern verfügt, indem
a) alle erforderlichen Ladevorgänge und Konfigurationsvorgänge der Applikation so vorgenommen werden, dass der Zustand von Datenspeicher und von Prozessorregistern einen lauffähigen Zustand der Applikation beschreiben, worauf
b) das so vorgeladene System angehalten wird und der Inhalt des Datenspeichers und die Prozessorregister nichtflüchtig gespeichert werden und
c) für zukünftige Startvorgänge lediglich die nichtflüchtig gespeicherten Inhalte des Datenspeichers und der Prozessorregister im Rechnersystem rekonstruiert werden.

Dabei reicht es im Extremfall aus, wenn die Schritte a) und b) nur einmal bei der Herstellung des Rechnersystems vorgenommen werden.

Die Durchführung von Schritt b) erfolgt durch:
- Benachrichtigung von Treibern für an das Rechnersystem angeschlossene Geräte,
- Anhalten des Systems durch Inaktivierung von Interrupts und/oder durch vorgesehene Systemaufrufe,
- Auslesen und Abspeichern der aktuellen Prozessorregister,
- Zurückschreiben von eventuellen modifizierten Daten eines zusätzlichen Vorhaltespeichers in den Datenspeicher und
- Abspeichern des Inhalts des Datenspeichers und der Registerinhalte in einem nichtflüchtigem Speicher.

Entsprechend dazu erfolgt die Durchführung von Schritt c) durch:
- Aktivierung eines Anhaltezustands durch Inaktivierung von Interrupts und/oder durch vorgesehene Systemaufrufe,
- Rekonstruktion des Inhalts des Datenspeichers aus dem nichtflüchtigem Speicher,
- Laden der Prozessorregister mit den im nichtflüchtigen Speicher abgelegten Werten und
- Benachrichtigung von Treibern für an das Rechnersystem angeschlossene Geräte.

Eine weitere Verbesserung im Hinblick auf die Dauer und den verbrauchten nichtflüchtigen Speicher eines erfindungsgemäßen Startvorganges lässt sich erreichen, indem
- bei der Durchführung von Schritt b) eine Komprimierung der nichtflüchtig zu speichernden Daten erfolgt und
- bei der Durchführung von Schritt c) eine Dekomprimierung der nichtflüchtig gespeicherten Daten erfolgt.

Vorzugsweise umfasst das Vorladen der Applikation auf dem Rechnersystem wenigstens eine Auswahl aus den folgenden Operationen:
- Vorbereiten von Tabellen,
- Anlegen von Prozessor-Stacks und Speicher-Heaps,
- Initialisieren von globalen Variablen.

Ferner wird die Aufgabe der Erfindung auch durch ein Rechnersystem mit schneller Startfunktion zur Ausführung einer Applikation gelöst mit
- einem Prozessor mit Prozessorregistern,
- einem flüchtigen Speicher, der einen Datenspeicher umfasst, und mit
- einem nichtflüchtigen Speicher, der zumindest solche Inhalte von Datenspeicher und von Prozessorregistern umfasst, die einen lauffähigen Zustand der Applikation beschreiben, und mit
- einem Mittel zum Anhalten des Systems, insbesondere durch Inaktivierung von Interrupts und/oder durch vorgesehene Systemaufrufe und mit
- einem Mittel zur Rekonstruktion von Inhalten von Datenspeicher und Prozessorregistern aus den einen lauffähigen Zustand der Applikation beschreibenden Inhalten des nichtflüchtigen Speichers.

Auch hierbei ist es vorteilhaft, wenn die einen lauffähigen Zustand der Applikation beschreibenden Inhalte des nichtflüchtigen Speichers in komprimierter Form vorliegen und ein Mittel zur Dekomprimierung dieser Inhalte vorgesehen ist.

Ein solches erfindungsgemäßes Rechnersystem lässt sich besonders zur Herstellung einer vollständigen Funktionsfähigkeit aus einem völlig ausgeschalteten Zustand verwenden, wobei eine Rekonstruktion von Inhalten von Datenspeicher und Prozessorregistern aus den einen lauffähigen Zustand der Applikation beschreibenden Inhalten des nichtflüchtigen Speichers im Zuge eines Einschaltvorgangs des Rechnersystems erfolgt.

Auf dieser Grundlage lassen sich besonders gut mobile Terminals konstruieren, insbesondere Telekommunikationsendgeräte.

Weitere Vorteile und Details der vorliegenden Erfindung ergeben sich anhand der folgenden Erläuterungen und in Verbindung mit den Figuren. Es zeigt jeweils in Prinzipdarstellung:
- FIG 1: ein Zeitdiagramm zur Vorbereitung eines vorgeladenen Systems gemäß der Erfindung,
- FIG 2: ein Zeitdiagramm eines schnellen Startvorgangs durch Wiederherstellung eines vorgeladenen Systems gemäß der Erfindung und
- FIG 3: ein Zeitdiagramm eines gewöhnlichen Systemstarts nach dem Stand der Technik.

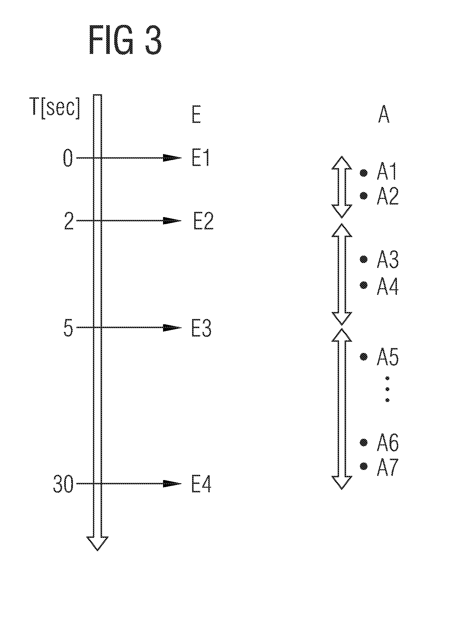

Zur näheren Beschreibung der Erfindung soll zuerst geklärt werden, was es bedeutet eine Applikation zu starten, d.h. welche Schritte ausgeführt werden müssen. Dazu ist ein herkömmlicher Startvorgang einer Applikation in der Darstellung gemäß der FIG 3 skizziert. Dazu ist auf der linken Seite die Zeit T in Sekunden aufgetragen. In der Mitte sind die verschiedenen Zeitpunkten zugeordneten Ereignisse E und rechts davon die daraufhin vorgenommenen Aktionen A aufgeführt.

Zum Zeitpunkt T=0 wird das Rechnersystem eingeschaltet (Ereignis E1). In einem embedded System liegt der Programmcode einer Applikation in der Regel im ROM (Read only memory oder nichtflüchtiger Speicher) oder RAM (Random access memory oder flüchtiger Speicher) der Hardware-Plattform vor. Es folgt auf E1 eine Initialisierung A1 und das Kopieren A2 einer Imagedatei in den RAM-Speicher.

Daraufhin, etwa bei T=2, wird dem Betriebssystem des Rechners die Kontrolle übergeben (Ereignis E2). Dazu werden in A3 die Strukturen des Betriebssystem-Kernel initialisiert. Darauf werden in A4 Gerätetreiber initialisiert. Bei etwa T=5 erfolgt dann der eigentliche Start E3 der Applikation.

Damit dieser Code jedoch lauffähig wird, müssen die Adressbereiche für Code-Daten und Stack alloziert und zugreifbar gemacht werden. Für Systeme mit virtuellem Speicher bedeutet dies, dass Systemtabellen für die MMU (Memory Management U-nit) initialisiert werden müssen. Größere Applikationen bestehen oft aus einer Vielzahl von DLLs (Dynamic Link Libraries), die nacheinander geladen (A5) und in irgend einer Form registriert und konfiguriert werden müssen. Dazu müssen Konfigurationsdaten (Registry-Daten) gelesen und durchsucht werden. Dieser Vorgang ist vergleichsweise zeitintensiv.

DLL steht dabei als Bezeichnung für Laufzeitbibliotheken oder als Bezeichnung für Dateien mit Unterroutinen in Form von bereits kompiliertem Code. Solche Routinen werden aber erst zur Laufzeit und wenn benötigt von dem zugehörigen Hauptprogramm aufgerufen und ausgeführt. Ferner können die Unterprogramme gleichzeitig von mehreren verschiedenen Programmen bzw. von mehreren Instanzen des gleichen Programms gleichzeitig genutzt werden, so dass dieses Unterprogramm nicht von jedem Hauptprogramm zusätzlich aufgerufen und in den Hauptspeicher des Rechnersystems geholt wird. Dies verringert die Größe des Hauptprogramms und damit den Platz, den dieses im Hauptspeicher benötigt.

Im weiteren Verlauf des Starts der Applikation werden dann Softwaretreiber initialisiert (A6) und Konfigurationsdaten gelesen (A7). Etwa nach 30 Sekunden, T=30, ist das System dann bereit zur Verarbeitung erster Bedienereingaben (Ereignis E4).

Aus Sicht des Prozessors werden während dieser Lade und Konfigurationsvorgänge Daten im Bereich des RAM modifiziert. Es werden Tabellen vorbereitet, Stacks und Heaps angelegt und globale Variablen initialisiert.

Dieser Bereich wird in der folgenden Beschreibung als Datenspeicher bezeichnet.

Alle diese Aktionen, die während des Startens einer Applikation ablaufen, modifizieren den Inhalt des Datenspeichers, nicht jedoch Codebereiche, die mitunter auch im RAM liegen. Der Zustand des Datenspeichers beschreibt zusammen mit den Registerinhalten des Prozessors den Zustand der Applikation bzw. des ganzen Systems.

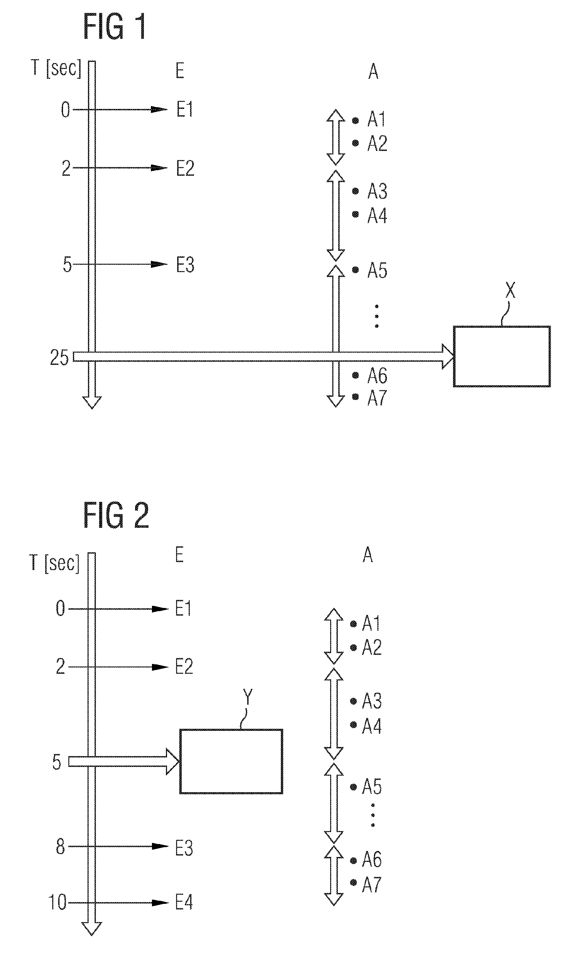

Die Erfindung beruht nun darauf, dass der Inhalt des Datenspeichers und die Prozessorregister nach dem Starten der Applikation eingefroren und nichtflüchtig abgespeichert wird (vgl. FIG 1). Die Verkürzung des Startvorgangs bzw. der Bootup-Zeit wird dadurch erreicht, dass bei dem beschleunigten Bootup die Applikation nicht auf herkömmlichem Wege gestartet werden muss, sondern dass lediglich der Datenspeicher und die Registerinhalte des Prozessors aus dem nichtflüchtigen Speicher rekonstruiert, also im einfachsten Falle kopiert werden müssen (vgl. FIG 2).

Zunächst soll der Vorgang zur Vorbereitung eines vorgeladenen Systems gemäß der Erfindung anhand von FIG 1 erläutert werden. Die FIG 1 entspricht im wesentlichen der voranstehend erläuterten FIG 3 bis zur Aktion A5, dem Laden der DLLs und dadurch bedingten Folgeaktivitäten. Bei etwa T=25 wird das System dann, wie weiter unten näher erläutert, eingefroren (Ereignis Y). Erst anschließend werden die weiteren Aktionen A6 und A7 durchgeführt.

Zum Zeitpunkt der Abspeicherung muss sichergestellt sein, dass der Inhalt des Datenspeichers konsistent ist, also genau den momentanen Zustand des Systems beschreibt. Es wird darauf geachtet, dass zwischengespeicherte (Fachjargon "gecachte") Daten, die nicht dem Inhalt des Datenspeichers entsprechen, im Datenspeicher aktualisiert werden. Der Begriff ,Cache' wird manchmal auch als Vorhaltespeicher bezeichnet. Darunter versteht man einen Zwischenspeicher, der zwischen zwei verschiedenen Speichersystemen angesiedelt ist und die Transfers zwischen ihnen beschleunigt bzw. vermindert.

Das erfindungsgemäße Fast-Bootup-Konzept beruht nach einem vorteilhaften Ausführungsbeispiel im wesentlichen auf den folgenden zwei Schritten.
A) Einfrieren und Abspeichern des Systemzustandes nach dem Starten aller relevanten Applikationen:
   - Benachrichtigung der Geräte-Treiber
   - Anhalten des Systems durch Inaktivierung der Interrupts bzw. durch spezielle Systemaufrufe. Dieser Mode wird in der folgenden Beschreibung als "Freeze-Mode" bezeichnet.
   - Auslesen und Abspeichern der Prozessorregister
   - Zurückschreiben (Flush) der modifizierten Daten-Cache Eintrage
   - Abspeichern des Datenspeichers und der Registerinhalte in nichtflüchtigem Speicher
B) Rekonstruktion des Systemzustandes aus den nichtflüchtig gespeicherten Daten:
   - Aktivierung des Freeze-Modes
   - Rekonstruktion des Datenspeichers aus dem nichtflüchtigem Speicher
   - Zurückschreiben (Flush) der modifizierten Daten-Cache Einträge und invalidieren der TLB (Translation Lookaside Bufter) Einträge
   - Laden der Prozessorregister mit den im nichtflüchtigen Speicher abgelegten Werten
   - Benachrichtigung der Geräte-Treiber

Die Darstellung gemäß der FIG 2 zeigt einen solchen schnellen Startvorgang durch Wiederherstellung eines vorgeladenen Systems gemäß der Erfindung. Die Ereignisse E1, E2 und die Aktionen A1 bis A4 verlaufen wie bei einem herkömmlichen Startvorgang. Etwa bei T=5 erfolgt dann jedoch ein Rekonstruktionsvorgang Y wie oben beschrieben. Dieser hat zur Folge, dass der z.B. in einen nichtflüchtigen Flash-Speicher gerettete Inhalt in das RAM des Rechnersystems kopiert wird (A8) und Treiber informiert werden (A9). Es folgen bei etwa T=8 das Ereignis E3 (Konfiguration der Applikation) mit den Aktionen A6 und A7, so dass bereits nach etwa 10 Sekunden, T=10, erste Benutzereingaben verarbeitet werden können (E4).

Für den Austausch des Datenspeichers zwischen nichtflüchtigem Speicher (z.B. Flash-Speicher) und RAM wird zur weiteren Beschleunigung und Einsparung von nichtflüchtigem Speicher vorteilhafterweise optional ein Komprimierungs-/Dekomprimierungsalgorithmus eingesetzt.

An einen "Freeze-Mode" werden bei der vorliegenden Erfindung die folgenden Anforderungen gestellt:
1) Der Rechner führt keine konkurrierende Prozesse aus. Es wird eine monothread Ausführung einer bestimmten Routine vorgenommen, die Freeze-Routine.
2) Die Freeze-Routine wird aufgerufen, nachdem sämtliche Treiber informiert wurden, dass der Rechner heruntergefahren wird.
3) Innerhalb der Freeze-Routine ist es möglich, auf die gesamten Ressourcen des Rechners zuzugreifen. Zum Beispiel lesen von physikalischen Speicheradressen, Umsetzen von wichtigen Hardwareeinheiten wie TLB oder Cache usw..
4) Das Betriebssystem befindet sich während der Ausführung der Freeze-Routine in einem stabilen Zustand.
5) Nachdem die Freeze-Routine zu Ende ausgeführt wurde, werden sämtliche Treiber darüber informiert, das die Geräte zu überprüfen bzw. neu zu initialisieren sind.
6) Als letztes wird in den normalen multithreaded Zustand übergangen.

Unter Multithreading versteht man die Fähigkeit einer Software, bestimmte Funktionen einer Applikation simultan auszuführen. Es werden also, anders als beim sogenannten Multitasking, bei dem mehrere verschiedene Programme parallel laufen innerhalb eines Programms verschiedene Funktionen aus Sicht des Anwenders gleichzeitig ausgeführt. Ein Thread stellt dabei die kleinste Einheit von ausführbarem Programmcode dar, dem entsprechend einer bestimmten Priorität Rechenzeit zuteilt wird.

Einen solchen Freeze-Mode kann man je nach Betriebssystem mit mehr oder weniger Aufwand implementieren. Für die Erfindung wesentlich ist dabei, den Freeze-Mode so einzusetzen,
- dass man in diesem Mode ein Abzug eines vorgeladenen (lauffertigen) Systems "einfrieren" kann und
- dass man in diesem Mode sehr kurzer Zeit genau dieses vorgeladene System wiederherstellen kann.

Der Freeze-Mode wird einerseits dazu genutzt, ein System "einzufrieren", das sehr aufwendig zu laden ist (20 Sekunden bis eine Minute). Diese erste Aufgabe der Freeze-Routine wird im Extremfall nur einmal bei der Herstellung des Rechners vorgenommen. Dabei wird das vorgeladene System auf einem nichtflüchtigen Speicher gerettet (vgl. FIG 1).

Die zweite Aufgabe der Freeze-Routine ist es, gleich nach jedem boot-Vorgang des Rechners den eingefrorenen Zustand vom nicht flüchtigem Speicher wiederherzustellen (vgl. FIG 2). Dadurch wird das lauffertige System innerhalb kurzer Zeit wiederhergestellt (im Sekundenbereich).

Die Erfindung wurde bereits im Rahmen einer Entwicklung für Fahrerinformationssysteme erprobt. Es ergeben sich hierdurch Zeiteinsparungen im Bereich von 20 Sekunden, so dass das Systeme eine Startzeit von unter 10 Sekunden aufweist (ca. 30 Sek. ohne Eingriff). Weitere Anwendungsbeispiele liegen im mobilen Telekommunikations- und Automatisierungsbereich, bei denen aus einem völlig ausgeschalteten Zustand (zum Zwecke des sparen von Strom) in kurzer Zeit eine vollständige Funktionsfähigkeit erreicht werden soll.

## Patentansprüche

1. Verfahren zur Beschleunigung eines Startvorganges einer Applikation mit großem Softwareanteil auf einem Rechnersystem, wobei der Rechner über einen Datenspeicher und einen Prozessor mit Prozessorregistern verfügt, wobei
a) alle erforderlichen Ladevorgänge und Konfigurationsvorgänge der Applikation so vorgenommen werden, dass der Zustand von Datenspeicher und von Prozessorregistern einen lauffähigen Zustand der Applikation beschreiben, worauf
b) das so vorgeladene System angehalten wird und der Inhalt des Datenspeichers und die Prozessorregister nichtflüchtig gespeichert werden und
c) für zukünftige Startvorgänge lediglich die nichtflüchtig gespeicherten Inhalte des Datenspeichers und der Prozessorregister im Rechnersystem rekonstruiert werden.

2. Verfahren zur Beschleunigung eines Startvorganges einer Applikation mit großem Softwareanteil auf einem Rechnersystem nach Anspruch 1, wobei die Schritte a) und b) nur einmal bei der Herstellung des Rechnersystems vorgenommen werden.

3. Verfahren zur Beschleunigung eines Startvorganges einer Applikation mit großem Softwareanteil auf einem Rechnersystem nach Anspruch 1 oder 2, wobei die Durchführung von Schritt b) erfolgt durch:
- Benachrichtigung von Treibern für an das Rechnersystem angeschlossene Geräte,
- Anhalten des Systems durch Inaktivierung von Interrupts und/oder durch vorgesehene Systemaufrufe,
- Auslesen und Abspeichern der aktuellen Prozessorregister,
- Zurückschreiben von eventuellen modifizierten Daten eines zusätzlichen Vorhaltespeichers in den Datenspeicher und
- Abspeichern des Inhalts des Datenspeichers und der Registerinhalte in einem nichtflüchtigem Speicher.

4. Verfahren zur Beschleunigung eines Startvorganges einer Applikation mit großem Softwareanteil auf einem Rechnersystem nach einem der vorangehenden Ansprüche, wobei die Durchführung von Schritt c) erfolgt durch:
- Aktivierung eines Anhaltezustands durch Inaktivierung von Interrupts und/oder durch vorgesehene Systemaufrufe,
- Rekonstruktion des Inhalts des Datenspeichers aus dem nichtflüchtigem Speicher,
- Laden der Prozessorregister mit den im nichtflüchtigen Speicher abgelegten Werten und
- Benachrichtigung von Treibern für an das Rechnersystem angeschlossene Geräte.

5. Verfahren zur Beschleunigung eines Startvorganges einer Applikation mit großem Softwareanteil auf einem Rechnersystem nach einem der vorangehenden Ansprüche, wobei
- bei der Durchführung von Schritt b) eine Komprimierung der nichtflüchtig zu speichernden Daten erfolgt und
- bei der Durchführung von Schritt c) eine Dekomprimierung der nichtflüchtig gespeicherten Daten erfolgt.

6. Verfahren zur Beschleunigung eines Startvorganges einer Applikation mit großem Softwareanteil auf einem Rechnersystem nach einem der vorangehenden Ansprüche, wobei das Vorladen der Applikation auf dem Rechnersystem wenigstens eine Auswahl aus den folgenden Operationen umfasst:
- Vorbereiten von Tabellen,
- Anlegen von Prozessor-Stacks und Speicher-Heaps,
- Initialisieren von globalen Variablen.

7. Rechnersystem mit schneller Startfunktion zur Ausführung einer Applikation mit
- einem Prozessor mit Prozessorregistern,
- einem flüchtigen Speicher, der einen Datenspeicher umfasst, und mit
- einem nichtflüchtigen Speicher, der zumindest solche Inhalte von Datenspeicher und von Prozessorregistern umfasst, die einen lauffähigen Zustand der Applikation beschreiben, und mit
- einem Mittel zum Anhalten des Systems, insbesondere durch Inaktivierung von Interrupts und/oder durch vorgesehene Systemaufrufe und mit
- einem Mittel zur Rekonstruktion von Inhalten von Datenspeicher und Prozessorregistern aus den einen lauffähigen Zustand der Applikation beschreibenden Inhalten des nichtflüchtigen Speichers.

8. Rechnersystem mit schneller Startfunktion zur Ausführung einer Applikation nach Anspruch 7, wobei die einen lauffähigen Zustand der Applikation beschreibenden Inhalte des nichtflüchtigen Speichers in komprimierter Form vorliegen und ein Mittel zur Dekomprimierung dieser Inhalte vorgesehen ist.

9. Verwendung eines Rechnersystems nach Anspruch 7 oder 8 zur Herstellung einer vollständigen Funktionsfähigkeit aus einem völlig ausgeschalteten Zustand, wobei eine Rekonstruktion von Inhalten von Datenspeicher und Prozessorregistern aus den einen lauffähigen Zustand der Applikation beschreibenden Inhalten des nichtflüchtigen Speichers im Zuge eines Einschaltvorgangs des Rechnersystems erfolgt.

10. Mobiles Terminal, insbesondere Telekommunikationsendgerät, mit einem Rechnersystem nach Anspruch 7 oder 8.
